# EUROPÄISCHE PATENTSCHRIFT

(11) **EP 1 892 481 B1**
(45) Veröffentlichungstag und Bekanntmachung des Hinweises auf die Patenterteilung: **14.06.2017**
(21) Anmeldenummer: 07015676.5
(22) Anmeldetag: 09.08.2007
(51) Int. Cl.: F28F 9/013, F28F 21/06, F28D 9/04, F28D 7/04, F28D 20/02

(54) **Wasser-/Eisspeicher**
Water/ice storage unit
Accumulateur d'eau/installation d'accumulation

(30) Priorität: 22.08.2006 DE 202006012871 U
(43) Veröffentlichungstag der Anmeldung: 27.02.2008
(73) Patentinhaber: CONSOLAR Solare Energiesysteme GmbH, 60489 Frankfurt am Main (DE)
(72) Erfinder: Leibfried, Ulrich, 79539 Lörrach (DE); Hermann, Jan Philipp, 79102 Freiburg (DE)
(74) Vertreter: Huwer, Andreas

(56) Entgegenhaltungen:
- EP-A- 0 927 861
- EP-A- 0 999 424
- EP-A- 1 426 720
- DE-A1- 3 213 992
- DE-A1- 19 707 158
- DE-A1-102004 052 447
- FR-A- 2 831 950
- GB-A- 2 124 746
- JP-A- 62 000 795
- US-A- 5 598 720
- US-A- 5 944 089
- US-A1- 2004 025 521
- US-B1- 6 178 770

## Beschreibung

Die Erfindung betrifft einen Latentspeicher nach dem Oberbegriffvon Anspruch 1.

Ein derartiger Latentspeicher ist aus GB 2 124 746 A bekannt. Er hat einen Behälter und einen von Sole durchströmten Wärmetauscher, der sowohl zur Wärmezufuhr als auch zum Wärmeentzug genutzt werden kann. Der Wärmetauscher weist zumindest zwei dünnwandige Wärmetauschermatten auf, die in vertikaler Ausrichtung im Behälter angeordnet sind und horizontal durchströmt werden.

Ein Wasser-/Eisspeicher kann insbesondere als Niedertemperatur-Wärmeenergiespeicher in Verbindung mit einer Wärmepumpe zur Bereitstellung von Warmwasser und/oder Heizenergie betrieben werden. Durch den Phasenwechsel ist eine sehr hohe spezifische Wärmekapazität realisierbar. Damit kann die Wärmeversorgung der Wärmepumpe vergleichmäßigt werden und Zeiten ohne oder mit schlechtem Wärmeangebot, wie es z. B. bei einer Luftwärmepumpe oder einer mit Solarenergie versorgten Wärmepumpe insbesondere nachts der Fall ist, überbrückt werden. Ein entsprechendes,System ist in der deutschen Patentanmeldung 103 00 427.0 beschrieben.

Eisspeicher werden v. a. in Verbindung mit Klima- und Kühlanlagen eingesetzt. Oft erfolgt dort der Gefriervorgang über einen eingebauten Wärmetauscher, während zur Kälteentladung (d. h., Wärmezufuhr) das Wasser aus dem Wassor-Eisgemisch engtnommen und an einem externen Wärmetauscher vorbei geführt wird. Bei Eisspeichern, bei denen sowohl Be- als auch Entladung über den gleichen internen Wärmetauscher erfolgt, ist der Schmelzvorgang das limitierende Kriterium, da die Wärmeleitfähigkeit von Wasser schlechter ist als die von Eis. Es gibt unterschiedliche Ansätze, um diese Begrenzung zu umgehen, z. B. durch Umrühren des Eisvolumens und in umgekehrter Richtung regelmäßiges Abschaben der am Wärmetauscher erzeugten Eisschicht.

Bei einem in der EP 0 927 861 B1 beschriebenen Eisspeicher besteht der Wärmetauscher aus Rohren aus Kunststoff. Die Rohen sind vertikal angeordnet. Auch hier wird das Wasser zur Kälteentnahme (Wärmezufuhr) entnommen. Bei der Verwendung des Wassers zur Kühlung wird es an einem externen Wärmetauscher erwärmt. Gleichzeitig werden die Röhrchen erwärmt, so dass beim Auftauen eines durchgefrorenen Eisblocks vertikale Kanäle um die einzelnen Rohre entstehen, durch die das Wasser angetrieben durch in den Behälter eingebrachte Blasen - zirkulieren kann. Zur Kältebeladung (Wärmeabfuhr) wird das Wasser über den internen Kunststoff-Wärmetauscher abgekühlt und gefroren.

Das System funktioniert nur als aktives, d. h. mit Umwälzpumpen, externen Wärmetauschern und Luftkompressor ausgestattetes System. Würde der Rohrwärmetauscher alleine für Be- und Entladung verwendet werden, so wäre die Effizienz wegen der engen Kanäle um die Rohre, die die Ausbildung einer freien Konvektion behindern, schlecht. Außerdem bestünde die Gefahr der Beschädigung von Wärmetauscher oder Behälter durch hohe Drücke, die beim Gefrieren entstehen können: Durch die Anordnung der vertikalen Röhrchenschlaufen entstehen beim Auftauen Wasserkanäle, die am Eintritt des Mediums am größten sind und nach unten schmaler werden und am wieder aufsteigenden Schenkel von unten nach oben immer schmaler werden. Wird nun nach teilweise erfolgtem Auftauvorgang wieder Wärme entzogen und das Wasser gefroren, können auf der Schenkelseite, in der sich der Wasserkanal nach oben verjüngt, Wassereinschlüsse innerhalb eines Eisblocks entstehen, die sich beim Gefrieren weiter ausdehnen und damit sehr hohe Drücke erzeugen.

Ein grundsätzlicher Nachteil, Wasser zum Kälteentzug bzw. Auftauen zu entnehmen ist, dass das gesamte Volumen nie vollständig durchgefroren werden kann, was zu einer Kapazitätsbegrenzung führt. Außerdem muss durch entsprechende Überwachungs- und Steuerungseinrichtungen das komplette Durchfrieren verhindert werden, da ansonsten das gesamte System ausfällt.

Bewegte Teile führen immer zu erhöhtem Ausfallrisiko und Wartungsaufwand. Daher gibt es auch statische Konzepte, d. h. ohne Umwälzung o. ä.. Stand der Technik sind:
- Kunststoffrohrschlange in Wasser-/Eisbehälter: In dieser Bauform gibt es verschiedene kommerzielle Produkte und Einzelrealisierungen (z.B. Icebank von Calmac, USA). Der Behälter kann drucklos und damit aus Kunststoff sein. Die verwendeten Kunststoffrohre haben einen Durchmesser von typisch 15 mm, Wanddicke typisch 2 mm, der Abstand zwischen den Rohren beträgt typisch 45 mm (horizontal und vertikal). Bei diesen Konzepten ist die Leistungsfähigkeit bezogen auf die eingesetzte Wärmetauscherfläche vergleichsweise schlecht: Wasser hat eine wesentlich schlechtere Wärmeleitfähigkeit als Eis. Wenn keine Konzeption auftritt, liegt der schlechteste Fall vor, wenn der Speicher geladen (aufgetaut) wird und das Eis fast vollständig aufgetaut ist. In den bekannten Eisspeicherkonstruktionen werden lange Kunststoffrohrschlangen in dem Behälter verlegt. In der Regel sind die Rohrschlangen um eine vertikale Achse gewickelt, d. h., die Windungen verlaufen in horizontalen Ebenen. Beim Auftauen entsteht dann um die Rohrschlange ein ebenfalls horizontaler Wasserkanal, in dem sich praktisch keine Konvektionsströmung ausbilden kann. Hinzu kommt die Wanddicke des Kunststoffrohres als thermischer Widerstand. Nachteilhaft ist daher die große Oberfläche und damit Rohrlänge, die benötigt wird, die zu einem recht hohen konstruktiven Aufwand und hohen Kosten sowie zu einem großen Sole-Inhalt führen (d. h., reduzierte Speicherkapazität). Um diesen Nachteil zu umgehen, gibt es diese Speicher mit einem zusätzlichen Luftblasenerzeuger. In der US-Patentschrift Nr. 5,598,720 wird ein solcher Eisspeicher beschrieben, bei dem der Wärmeübergang durch Luftblasen verbessert wird.
- Wasser/Eis im Rohr: Bei diesem neueren Konzept ist der Eisspeicher ähnlich wie ein Rohrbündel Wärmetauscher aufgebaut. Es ermöglicht im Vergleich zu obiger Standardlösung eine homogenere Wärmeübertragung, und bringt v. a. bei Großanlagen verfahrenstechnische Vorteile. Nachteil ist auch hier der recht hohe Aufwand (Kosten), und der große Sole-Inhalt. (Quelle: ChemieTechnik 29. Jahrgang(2000), Nr. 5)

Die Aufgabenstellung der Erfindung für den Eisspeicher ist die Erfüllung folgender Anforderungen:
- Ein Konzept, bei dem sowohl Wärmeentzug als auch Wärmezufuhr über einen Wärmetauscher geschehen, da z. B. in Verbindung mit einer Wärmepumpenheizung die Wärmeentnahme nicht ohne weiteres begrenzt werden kann auf ein unvollständiges Gefrieren. Vielmehr soll das Eis auch weiter abgekühlt werden können, damit es kälter als eine verfügbare Niedertemperaturwärmequelle, wie z.B. Luft wird, und eine Wärmezufuhr bei diesem tiefen Temperaturniveau wieder möglich wird.
- Der Wärmetauscher soll eine große Oberfläche bei kleinem Volumen haben.
- Der Wärmetauscher soll zu geringen Kosten herstellbar sein.
- Das Konzept soll vorzugsweise passiv funktionieren, d. h., ohne bewegliche Teile, um eine sehr hohe Betriebssicherheit zu erreichen- Bei Einsatz von aktiven Elementen soll die Funktion des Speichersystems durch Ausfall dieser Teile nicht ebenfalls ausfallen, sondern - mit geringerem Wirkungsgrad - weiter gewährleistet sein.
- Bei der passiven Betriebsweise muss sichergestellt sein, dass sich beim Einfriervorgang das noch nicht gefrorene Wasser immer frei ausdehnen kann und nicht zwischen Eisbereichen eingeschlossen wird, wodurch hohe Drücke entstünden und schließlich der Eisblock gesprengt würde und dabei auch Wärmetauscher und/oder Behälter beschädigt werden könnte.

Die Aufgabenstellung wird erfindungsgemäß mit den Merkmalen des Anspruchs 1 gelöst.

Der Wasser-/Eisspeicher besteht aus einem drucklosen, i. d. R. isolierten, mit Wasser gefüllten Behälter 1, vorzugsweise aus Kunststoff, da kostengünstig, elastisch, korrosionsfrei und leicht.

Als Wärmetauscher werden dünnwandige Matten 2 verwendet. Hierfür kommen insbesondere Kunststoffe in Frage, solange die Wandstärke gering ist, da kostengünstig; elastisch und korrosionsfrei. Bei engmaschig miteinander verbundenen Matten wird die Druckfestigkeit bereits durch geringe Wandstärken erreicht. Wirtschaftlich besonders geeignet für den Aufbau der Wärmetauschermatten sind parallel geschaltete, eng nebeneinander liegende Kunststoffrohre mit sehr kleinem Durchmesser (typisch 3 - 5 mm) und geringer Wandstärke « 1 mm). Solche Rohrstrukturen sind als für Flächenheizungen entwickelte Kapillarrohr-Matten zu vergleichsweise günstigen Kosten verfügbar.

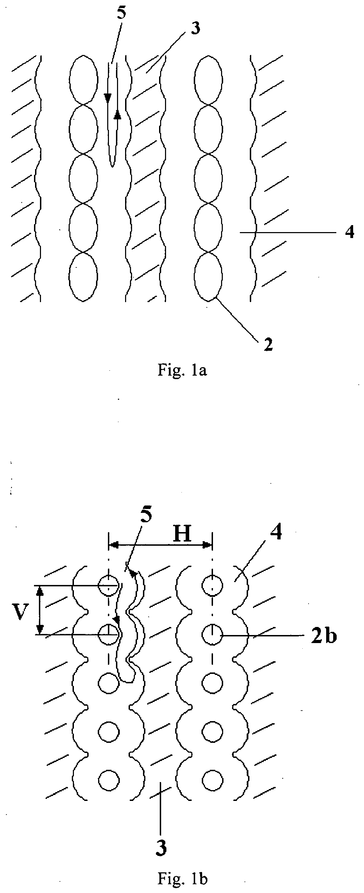

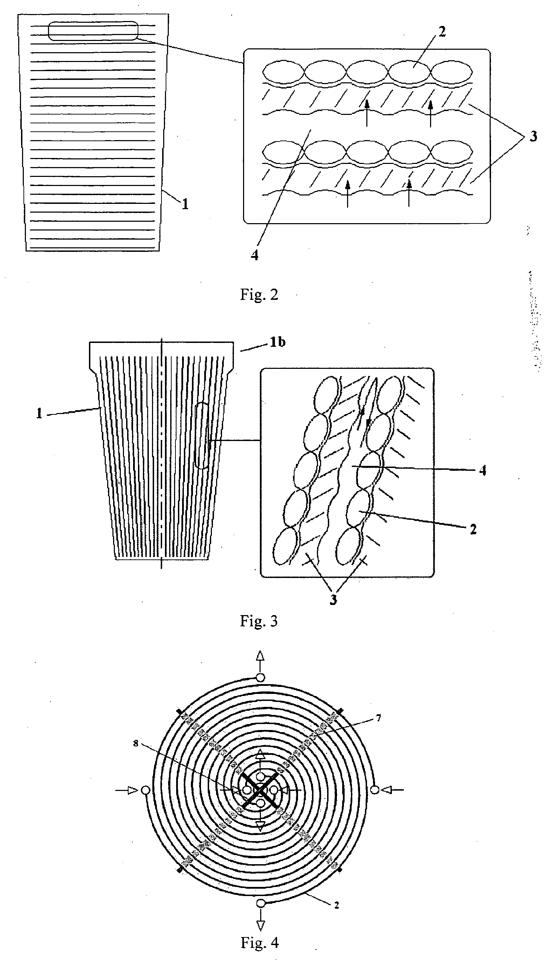

Um bei den engen Strömungsquerschnitten einen akzeptablen Druckverlust zu erreichen, müssen in der Regel mehrere Matten parallel verschaltet werden. Durch die Anordnung der Matten lassen sich zwei unterschiedliche, ggf. kombinierbare Effekte zur. Erzielung eines guten Wärmeübergangs speziell im flüssigen Zustand erreichen:
1. Anordnung zur Bildung von vertikalen Strömungskanälen für das geschmolzene Wasser für freie Konvektion:
   Die Matten 2 sind hierzu vertikal ausgerichtet und horizontal durchströmt. Sie werden vorzugsweise in Spiralen gewickelt, da dies fertigungstechnisch, vergleichsweise einfach zu realisieren ist. Dadurch entsteht beim Auftauen des Eises 3 schnell über die gesamte Höhe und über den gesamten Umfang der Spiralwindung ein gleichmäßiger vertikaler Wasserkanal 4 um die Röhrchen herum, in dem sich vertikale Konvektionswalzen 5 ausbilden können, wodurch der Wärmeübergang verbessert wird (Vergl. Fig. 1, welche einen nicht erfindungsgemäß ausgestalteten Wärmetauscher zeigt). Allerdings treten auf Grund der Anomalie des Wassers in diesem Temperaturbereich nur geringe Dichtedifferenzen auf. Wenn kleine Temperaturdifferenzen unter 4 K für den Wärmeaustausch ausreichen, nimmt die Dichte in Abhängigkeit der Temperatur nicht.zunächst zu und dann wieder ab, was sich behindernde Auf-und Abströmtendenzen zur Folge hätte. Bei Temperaturen unter 4 °C an der Wärmetauscherfläche sinkt das Wasser dort ab und steigt an der Eisoberfläche wieder auf. Bei Verwendung von Kapillarrohrmatten ist der vertikale Abstand M der Röhrchen 2b auf der Matte geringer ist als der horizontale Abstand (H) zwischen den Matten zu wählen, damit sicher der gleiche Effekt ergibt. Bei einer Spirale ist H der Abstand zwischen den einzelnen Spiralwindungen (vergl. Figur 1 b). Da der Wasser-/Eisspeicher erfindungsgemäß auch im flüssigen Zustand effektiv betrieben werden soll, bringt diese vertikale Ausrichtung der Wärmetauschermatten auch hier eine deutlich e Verbesserung des Wärmeübergangs.
      Beim Einfrieren des Wassers bilden sich vertikale Eisschichten entlang der Wärmetauschermatten. Das noch nicht gefrorene Wasser kann während der Volumenausdehnung durch die verbleibenden Kanäle nach oben strömen. Wichtig ist dabei, dass der Wärmeentzug von oben bis unten gleichmäßig erfolgt, und dass der Abstand der Matten sehr konstant ist oder nach oben zunimmt (konische Form).
2. Anordnung zur Nutzung des Eisauftriebs zur Minimierung der Wasserspalte zwischen Eis und Wärmetauscher:
   Anhand von Figur 2 und 3 wird dieses Prinzip für einen nicht erfindungsgemäß ausgestalteten Wärmetauscher, der horizontal angeordnete Matten aufweist, erläutert. Mit Kapillarrohrmatten kann das realisiert werden, indem der horizontale Abstand der Röhrchen 2b zwischen den Windungen geringer ist als der vertikale Abstand. Hierdurch entsteht beim Auftauen an diesen horizontalen Matten 2 schnell eine durchgängige Wasserschicht 4. Wenn gleichzeitig durch eine konische und glatte Behälterform erreicht wird, dass das Eis sich dort lösen kann, entstehen (evtl. anfangs miteinander verbundene) Eisplatten 3 zwischen den Matten bzw. Röhrchenspiralen. Diese Eisplatten können aufschwimmen und sind somit immer in direktem Kontakt mit den Matten 2 bzw. Röhrchenspiralen 2b, wodurch die Wärmeleitwege durch stehendes Wasser minimiert und der Wärmeübergang maximiert wird.

Die unter 2 beschriebene Anordnung hat den Nachteil; dass dort aufgrund der horizontalen Anordnung stabile Wasserschichten entstehen, d. h. der Wärmeübergang beruht alleine auf Konduktion.

Eine Kombination aus beiden Prinzipien stellt die Figur 3 dar, die einen erfindungsgemäß ausgebildeten Wärmetauscher zeigt: Die Wärmetauschermatten sind dort in sich nach oben erweiternden Spiralen gewickelt. Dadurch werden mehrere Vorteile erreicht:
- Es können sich vertikale Konvektionswalzen ausbilden, d. h., verbesserter Wärmeübergang.
- Gleichzeitig können die kegelförmigen Eisschichten aufschwimmen und immer in engem Kontakt zu den Wärmetauschermatten sein.
- Durch die Erweiterung der Strömungskanäle nach oben ist die Sicherheit gegen Eiseinschlüsse erhöht: Das Wasser kann sich beim Gefriervorgang frei nach oben ausdehnen.

Eine Vielzahl unterschiedlicher Anordnungen der Matten in Form von Spiralen ist möglich. Der Verlauf der Strömungskanäle - bzw. bei Kapillarrohrmatten die Röhrchenanordnung - wird vorzugsweise so gewählt, dass der gesamte Speicherinhalt gleichmäßig auftaut oder einfriert. So ist bei minimalem Temperaturunterschied bei Be- oder Entladung der gesamte Wärmetauscher am Energieumsatz beteiligt.

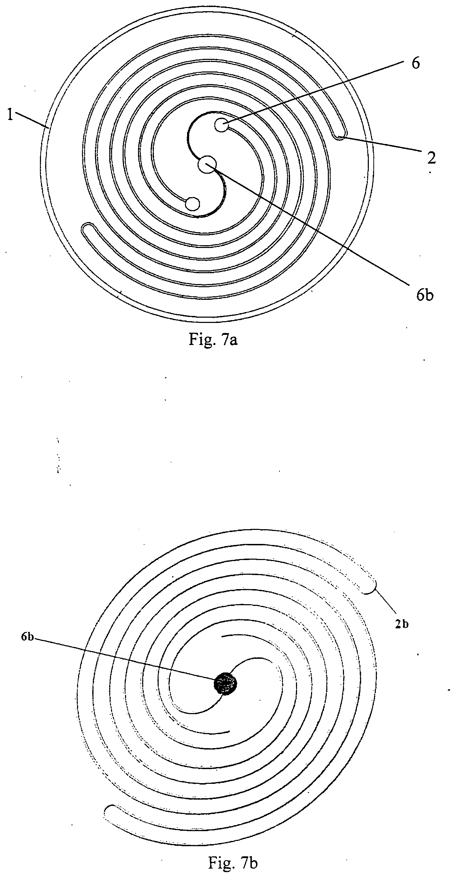

Mögliche Anordnungen, die für eine gleichmäßige Beladung sorgen sind in den Figuren 4 - 7 dargestellt, hier teilweise anhand von Kapillarrohrmatten, analog können anders ausgebildete Matten verwendet werden:
1. 4 parallel gewickelte Wärmetauschermatten 2 werden gegensinnig durchströmt (siehe Figur 4). Hierbei können jeweils 4 Sammler 6 in einer Reihe miteinander verbunden werden, was den Aufbau, die Positionierung der Sammler und die Stabilität der gesamten Anordnung verbessert.

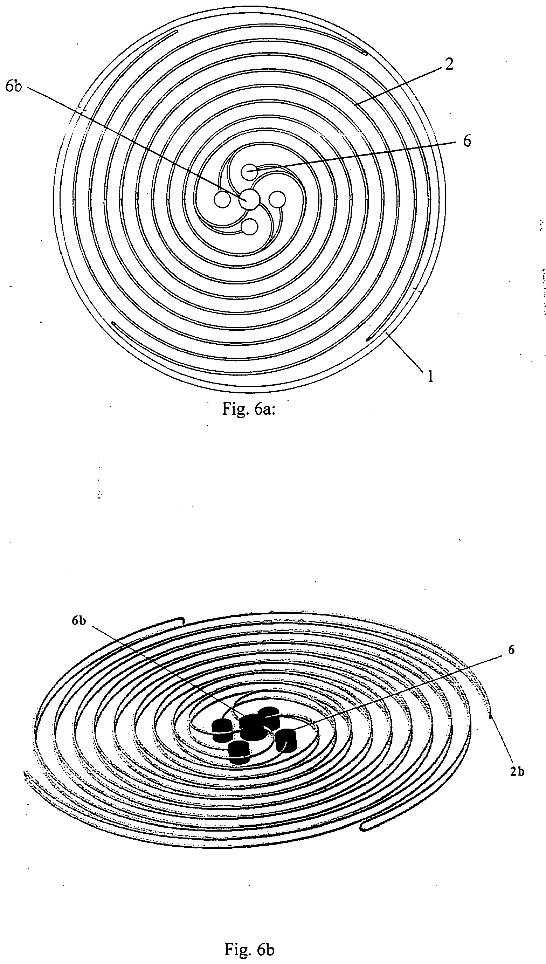

2. Figur 6a und σb: Die Kanäle bzw. Röhrchen innerhalb einer Matte 2 werden gegensinnig durchströmt, d. h., beide Sammler σ sind auf dergleichen Seite (z. B. in der Mitte) und die Röhrchen beschreiben am Ende der Matte innerhalb der Mattenebene eine Schlaufe zurück zum Sammler. Figur-6 a + b zeigt eine Anordnung, bei der 4 Matten an ein gemeinsames zentrales Sammlerrohr σb angeschlossen sind und dann in der Nähe des Zentrums mit 4 einzelnen - Sammlerrohren σ enden.
3. Die Kanäle bzw. Röhrchen 2b der Matte(n) sind mit einer engen Biegung nach halber Röhrchenlänge versehen, so dass sich auch hier beide Sammler im Zentrum befinden (Figur 7 a + b).

Wichtig für eine gute Funktion des Eisspeichers ist die Sicherstellung eines gleichmäßigen Röhrchenabstands sowohl innerhalb der Matte (vertikal) als auch zwischen den Windungen (horizontal). Gleichzeitig soll die Wärmetauscherspirale einfach und kostengünstig herstellbar sein.

Clipsbänder, die in bestimmten Abständen auf die Röhrchen der Matten geclipst werden, sind bei Kapillarrohrmatten üblich. Erfindungsgemäß werden die Clipsbänder 7 so ausgeformt werden, dass Sie, wenn die Matten zu einer Spirale aufgewickelt werden, gleichzeitig als Abstandshalter dienen (vergleiche Figur 4). Hierzu ist Wichtig, dass zum einen die Bänder 7 in korrekten, durch die Spiralwindung vorgegebenen Abständen aufgebracht werden, so dass sie im aufgewickelten Zustand immer nur aufeinander zu liegen kommen.

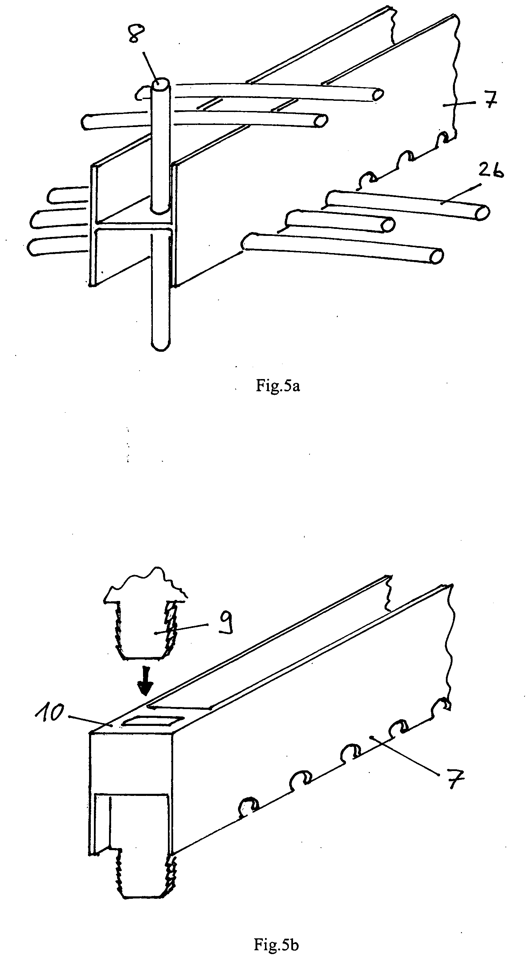

Um eine exakte Anordnung der Spiralen zu erreichen, können erfindungsgemäß die Abstandsbänder 7 miteinander verbunden werden, z. B. durch Stäbe 8, die durch Löcher in den Bändern geschoben werden (vergl. Fig. 5), oder in den Abstandsbändern integrierte Verbindungsclipse 9,10 (vergl. Fig. 5b).

Wenn die Matten im nicht gewickelten Zustand oben etwas länger sind als unten, können sie so gewickelt werden, dass der Windungsabstand oben etwas größer ist als unten. Durch die Stäbe 8 oder konische Abstandsbänder 7 kann erreicht werden, dass ein gleichmäßig sich nach oben verbreitender Spalt entsteht.

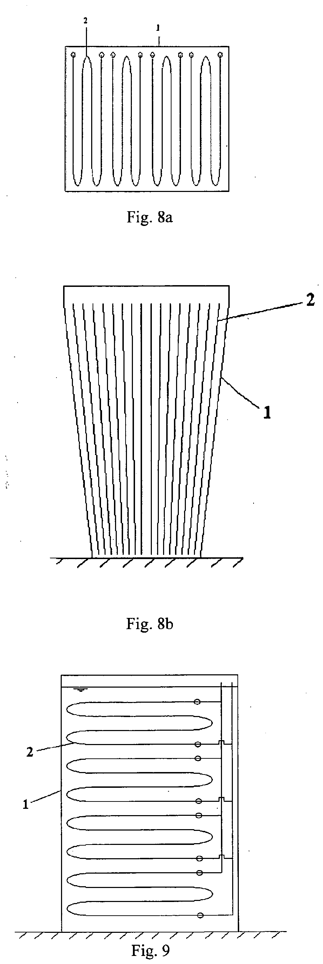

Statt einer spiralförmigen Anordnung der Wärmetauschermatten ist auch eine schlangenförmige Anordnung möglich. Figur 8a zeigt einen Speicherbehälter 1 von oben, bei dem die Matten 2 vertikal angeordnet sind, so dass vertikale Wasserkanäle entstehen, wie oben beschrieben. Auch bei dieser Anordnung können die Matten mit nach oben sich vergrößernden Abständen positioniert werden. Die Fig. 8b zeigt den Behälter im Schnitt.

Figur 9 zeigt einen nicht erfindungsgemäß ausgestalteten Speicherbehälter 1 von der Seite, bei dem die Matten 8 horizontal angeordnet sind, so dass beim Auftauen aufschwimmende Eisplatten entstehen, wie oben beschrieben.

In beiden Fällen wird zur guten Ausfüllung des Behälters durch den Wärmetauscher vorzugsweise ein Behälter mit rechteckigem Querschnitt eingeselzt, welcher den Vorteil einer insgesamt besseren Raumausnutzung bietet.

Als Wärmetauschermatten können neben Kapillarrohrmatten erfindungsgemäß auch andere Wärmetauschermatten, z. B: durch Stege oder Gewebe miteinander verbundene Folien zur Realisierung der Wärmetauscher verwendet werden.

Der Speicherbehälter 1 hat vorzugsweise eine leicht konische Form. Oben hat er vorzugsweise eine Erweiterung 1 b (vergl. Fig. 3). Die konische Form stellt sicher, dass der Behälter von innen nach außen und von unten nach oben durchfriert, so dass keine Wassereinschlüsse entstehen, die den Behälter gefährden könnten. Der obere Behälterbereich dient als Ausdehnungsvolumen, aufgrund der Erweiterung wird Bau- (und Wärmetauscher-) -höhe gespart.

Weitere Mattenanordnungen, z. B. in konzentrischen Zylindern, fallen ebenfalls unter den Erfindungsanspruch.

Die Erfindung kann zur weiteren Verbesserung des Wärmeübergangs mit einer kleinen Umwälzvorrichtung (z. B. kleine Pumpe oder Luftblasen), die die Strömung durch die Kanäle verstärkt, kombiniert werden, ihre Funktion ist jedoch nicht davon abhängig.

Anstelle von Wasser/Eis kann die Erfindung auch als Latentspeicher mit anderen Medien mit Phasenwechsel angewandt werden.

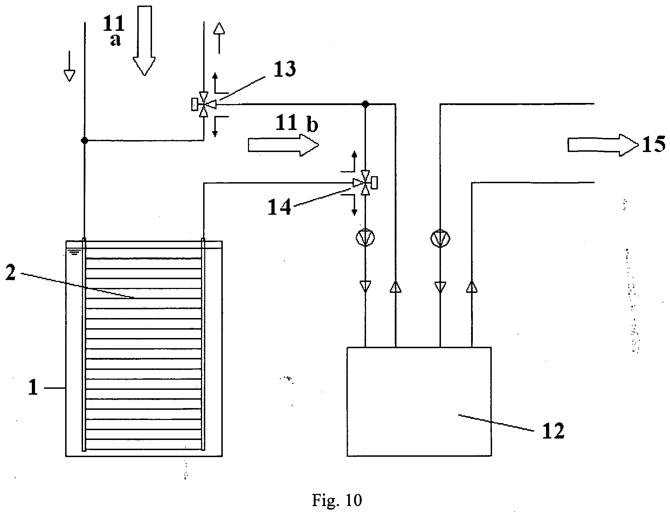

Der Eisspeicher kann entsprechend Figur 10 mit einer Wärmepumpe verschaltet werden:
Von der Niedertemperatur-Wärmequelle 11 a (z. B. Luft) strömt die erwärmte Sole durch den Wasser-/Eisspeicher und dann (Wärmestrom 11 b) in den Verdampfer der Wärmepumpe 1 2. Wärmeüberschüsse werden im Wasser-/Eisspeicher eingelagert, fehlende Wärme kann aufgenommen werden. Dabei kann der Speicher - im Gegensatz zu reinen Eisspeichern - in dem gesamten Arbeitsbereich der Wärmepumpe betrieben werden, z. B. von - 20 °C bis + 25 °C. Durch das Umschaltventil 13 kann die,Niedertemperaturwärmequelle überbrückt werden; falls sie eine tiefere Temperatur hat als der Eisspeicher. Mit dem Umschaltventil 14 kann die Wärmepumpe überbrückt werden, falls sie nicht läuft, aber Wärme in den Speicher geladen werden kann.

Die Wärmepumpe liefert, wenn sie läuft, Wärme 15 bei höherer Temperatur.

### Bezeichnungen:

- 1: Eisspeicherbehälter
- 1b: Behältererweiterung
- 2: Wärmetauschermatten
- 2b: Röhrchen von Kapillarrohrmatte
- 3: Eis
- 4: Wasser, Wasserschicht, Wasserkanal
- 5: Konvektionsströmung
- 6: Sammler
- 7: Abstands-Clipsband
- 8: Verbindungsstäbe.zwischen.Abstands-Clipsbädern
- 9,10: Steckverbindungen
- 11a: Niedertemperaturwärmequelle
- 11b: Niedertemperaturwärme zur Wärmepumpe
- 12: Wärmepumpe
- 13: Umschaltventil
- 14: Umschaltventil
- 15: Nutzwärme bei höherer Temperatur

## Patentansprüche

1. Latentspeicher, aufgebaut aus einem Behälter (1)
und einem von Sole durchströmten Wärmetauscher,
der sowohl zur Wärmezufuhr (11 a) als auch zum Wärmeentzug (11 b) genutzt werden kann
und der zumindest zwei Lagen aus zumindest einer dünnwandigen Wärmetauschermatte (2) aufweist,
die in vertikaler Ausrichtung im Behälter (1) angeordnet sind und horizontal durchströmt werden,
**dadurch gekennzeichnet, dass**
die Lagen der Wärmetauschermatten (2) zueinander mit nach oben zunehmendem Abstand angeordnet sind.

2. Latentspeicher nach Anspruch 1, **dadurch gekennzeichnet, dass** die Wärmetauschermatten (2) aus Kunststoff sind.

3. Latentspeicher nach Anspruch 1 oder 2, **dadurch gekennzeichnet, dass** die Wärmetauschermatten (2) aus durch Verbindungsstellen, Gewebe oder Stege engmaschig miteinander verbundenen Folien aufgebaut sind.

4. Latentspeicher nach einem der Ansprüche 1 bis 3, **dadurch gekennzeichnet, dass** die Wärmetauschermatten aus Kapillarröhrchen (2b) aufgebaut sind, deren vertikaler Abstand (V) kleiner ist als der horizontale Abstand (H).

5. Latentspeicher nach einem der Ansprüche 1 bis 4, **dadurch gekennzeichnet, dass** mindestens eine Wärmetauschermatte (2) spiralförmig angeordnet ist, dass die Strömungskanäle der Wärmetauschermatte (2) so angeordnet sind, dass sie in vertikaler Richtung immer abwechselnd gegensinnig durchströmt werden.

6. Latentspeicher nach einem der Ansprüche 1 bis 5, **dadurch gekennzeichnet, dass** mindestens vier Wärmetauschermatten (2) spiralförmig angeordnet sind, und die mindestens acht Sammler (6) der Wärmetauschermatte (2) durch jeweils mindestens vier geradlinige Verbindungsleitungen so miteinander verbunden sind, dass sich eine jeweils gegensinnige Durchströmung der benachbarten Windungen ergibt.

7. Latentspeicher nach einem der Ansprüche 5 bis 6, **dadurch gekennzeichnet, dass** die Kapillarröhrchen (2b) durch Abstandshalter (7) in ihrem Abstand zueinander fixiert sind und die Abstandshalter (7) gleichzeitig so geformt sind, dass sie den Windungsabstand der Spiralen fixieren, wobei sie in solchen Abständen auf den Wärmetauschermatten (2) fixiert sind, dass sie in Spiralform immer nebeneinander liegen.

8. Latentspeicher nach Anspruch 7, **dadurch gekennzeichnet, dass** die Abstandshalter (7) mit durchgängigen Stäben (8) in der Spiralform miteinander verbunden bzw. zueinander fixiert sind.

9. Latentspeicher nach Anspruch 7, **dadurch gekennzeichnet, dass** die Abstandshalter (7) mit integrierten Steckverbindungen (9, 10) in der Spiralform miteinander verbunden bzw. zueinander fixiert sind.

10. Latentspeicher nach einem der Ansprüche 1 bis 4, **dadurch gekennzeichnet, dass** die Wärmetauschermatten (2) schlangenförmig parallel vorzugsweise in einem Behälter mit rechteckigem Querschnitt angeordnet sind.

11. Latentspeicher nach einem der Ansprüche 1 bis 10, **dadurch gekennzeichnet, dass** der Behalter (1) sich nach oben konisch erweitert.

12. Latentspeicher nach einem der Ansprüche 1 bis 11, **dadurch gekennzeichnet, dass** er als Wasser-Eisspeicher ausgestaltet ist.

13. Latentspeicher nach Anspruch 12, **dadurch gekennzeichnet, dass** der Behälter (1) im oberen Bereich eine zusätzliche Erweiterung (1 b) zur Aufnahme des sich ausdehnenden Wassers aufweist.

## Claims

1. Latent heat accumulator, constructed from a container (1) and a heat exchanger which is flowed through by brine water, can be used both for adding heat (11a) and for removing heat (11b), and has at least two layers comprising at least one thin-walled heat exchanger mat (2), which layers are arranged in a vertical orientation in the container (1) and are flowed through horizontally, **characterized in that** the layers of the heat exchanger mats (2) are arranged at a spacing from one another which increases towards the top.

2. Latent heat accumulator according to Claim 1, **characterized in that** the heat exchanger mats (2) are made from plastic.

3. Latent heat accumulator according to Claim 1 or 2, **characterized in that** the heat exchanger mats (2) are constructed from films which are connected to one another in a closely meshed manner by way of connecting points, woven fabrics or webs.

4. Latent heat accumulator according to one of Claims 1 to 3, **characterized in that** the heat exchanger mats are constructed from small capillary tubes (2b), the vertical spacing (V) of which is smaller than the horizontal spacing (H).

5. Latent heat accumulator according to one of Claims 1 to 4, **characterized in that** at least one heat exchanger mat (2) is arranged in a spiral manner, and **in that** the flow channels of the heat exchanger mat (2) are arranged in such a way that they are flowed through in opposite directions in a manner which always alternates in the vertical direction.

6. Latent heat accumulator according to one of Claims 1 to 5, **characterized in that** at least four heat exchanger mats (2) are arranged in a spiral manner, and the at least eight headers (6) of the heat exchanger mat (2) are connected to one another by way of in each case at least four rectilinear connecting lines, in such a way that the result is a respectively opposed throughflow of the adjoining windings.

7. Latent heat accumulator according to either of Claims 5 and 6, **characterized in that** the spacing of the small capillary tubes (2b) from one another is fixed by way of spacer elements (7), and the spacer elements (7) are at the same time shaped in such a way that they fix the winding spacing of the spirals, the said spacing elements being fixed on the heat exchanger mats (2) at distances such that they always lie next to one another in a spiral shape.

8. Latent heat accumulator according to Claim 7, **characterized in that** the spacer elements (7) are connected to one another or are fixed to one another in the spiral shape by way of continuous rods (8).

9. Latent heat accumulator according to Claim 7, **characterized in that** the spacer elements (7) are connected to one another or are fixed to one another in the spiral shape by way of integrated plug-in connections (9, 10).

10. Latent heat accumulator according to one of Claims 1 to 4, **characterized in that** the heat exchanger mats (2) are arranged in parallel in a serpentine manner, preferably in a container with a rectangular cross section.

11. Latent heat accumulator according to one of Claims 1 to 10, **characterized in that** the container (1) widens conically towards the top.

12. Latent heat accumulator according to one of Claims 1 to 11, **characterized in that** it is configured as a water/ice store.

13. Latent heat accumulator according to Claim 12, **characterized in that** the container (1) has an additional widened portion (1b) in the upper region for receiving the expanding water.

## Revendications

1. Accumulateur à chaleur latente, constitué d'un récipient (1) et d'un échangeur de chaleur parcouru par une saumure, qui peut être utilisé à la fois pour l'apport de chaleur (11a) et pour l'extraction de chaleur (11b) et qui présente au moins deux couches constituées d'au moins un tapis d'échangeur de chaleur à paroi mince (2), qui sont disposées suivant une orientation verticale dans le récipient (1) et qui sont parcourues horizontalement par l'écoulement,
**caractérisé en ce que**
les couches des tapis d'échangeur de chaleur (2) sont disposées l'une par rapport à l'autre avec une distance croissante vers le haut.

2. Accumulateur à chaleur latente selon la revendication 1, **caractérisé en ce que** les tapis d'échangeur de chaleur (2) sont en plastique.

3. Accumulateur à chaleur latente selon la revendication 1 ou 2, **caractérisé en ce que** les tapis d'échangeurs de chaleur (2) sont constitués de feuilles connectées les unes aux autres par mailles étroites par des points de connexion, des tissus ou des nervures.

4. Accumulateur à chaleur latente selon l'une quelconque des revendications 1 à 3, **caractérisé en ce que** les tapis d'échangeur de chaleur sont constitués de petits tubes capillaires (2b) dont l'espacement vertical (V) est inférieur à l'espacement horizontal (H).

5. Accumulateur à chaleur latente selon l'une quelconque des revendications 1 à 4, **caractérisé en ce qu'**au moins un tapis d'échangeur de chaleur (2) est disposé en spirale, **en ce que** les canaux d'écoulement du tapis d'échangeur de chaleur (2) sont disposés de telle sorte qu'ils soient parcourus dans la direction verticale en sens inverse toujours en alternance.

6. Accumulateur à chaleur latente selon l'une quelconque des revendications 1 à 5, **caractérisé en ce qu'**au moins quatre tapis d'échangeur de chaleur (2) sont disposés en spirale, et les au moins huit accumulateurs (6) des tapis d'échangeur de chaleur (2) sont connectés les uns aux autres par au moins quatre lignes de connexion rectilignes respectives de telle sorte que l'on obtienne un écoulement à chaque fois en sens inverse des enroulements adjacents.

7. Accumulateur à chaleur latente selon l'une quelconque des revendications 5 à 6, **caractérisé en ce que** les petits tubes capillaires (2b) sont fixés de manière espacée les uns par rapport aux autres par des entretoises (7) et les entretoises (7) sont formées simultanément de telle sorte qu'elles fixent la distance d'enroulement des spirales, les entretoises étant fixées sur les tapis d'échangeur de chaleur (2) à des distances telles qu'elles se situent toujours les unes à côté des autres en spirale.

8. Accumulateur à chaleur latente selon la revendication 7, **caractérisé en ce que** les entretoises (7) sont connectées les unes aux autres en spirale ou sont fixées les unes aux autres en spirale avec des barres continues (8).

9. Accumulateur à chaleur latente selon la revendication 7, **caractérisé en ce que** les entretoises (7) sont connectées les unes aux autres en spirale ou sont fixées les unes aux autres en spirale avec des raccords enfichables intégrés (9, 10).

10. Accumulateur à chaleur latente selon l'une quelconque des revendications 1 à 4, **caractérisé en ce que** les tapis d'échangeur de chaleur (2) sont disposés en forme de serpentin parallèlement de préférence dans un récipient de section transversale rectangulaire.

11. Accumulateur à chaleur latente selon l'une quelconque des revendications 1 à 10, **caractérisé en ce que** le récipient (1) s'élargit coniquement vers le haut.

12. Accumulateur à chaleur latente selon l'une quelconque des revendications 1 à 11, **caractérisé en ce qu'**il est réalisé sous forme d'accumulateur d'eau/glace.

13. Accumulateur à chaleur latente selon la revendication 12, **caractérisé en ce que** le récipient (1) présente dans la région supérieure un élargissement supplémentaire (1b) pour recevoir l'eau se dilatant.
